Europäisches Patentamt

European Patent Office

Office européen des brevets

(11) Veröffentlichungsnummer: **0 291 570**
**A2**

(12) **EUROPÄISCHE PATENTANMELDUNG**

(21) Anmeldenummer: **87114369.9**

(51) Int. Cl.4: **B23Q 3/157**

(22) Anmeldetag: **01.10.87**

(30) Priorität: **21.05.87 DE 3717016**

(43) Veröffentlichungstag der Anmeldung:
**23.11.88 Patentblatt 88/47**

(84) Benannte Vertragsstaaten:
**AT BE CH DE ES FR GB IT LI NL SE**

(71) Anmelder: **IMA-Norte Maschinenfabriken Klessmann GmbH & Co.**
**Am Ölbach 19**
**D-4830 Gütersloh 1(DE)**

(72) Erfinder: **Gerhard, Peter**
**Sonnenhügel 5**
**D-4800 Bielefeld 15(DE)**
Erfinder: **Kempkensteffen, Heinz**
**Im grünen Winkel 1**
**D-4835 Rietberg 3(DE)**
Erfinder: **Heid, Rudolf**
**Dr.-Probst-Strasse 11**
**CH-4708 Lutterbach(CH)**

(74) Vertreter: **Elbertzhagen, Otto et al**
**Patentanwälte Thielking & Elbertzhagen**
**Gadderbaumer Strasse 20**
**D-4800 Bielefeld 1(DE)**

(54) **Werkzeugmaschine mit vertikaler Arbeitsspindel und Werkzeugwechselvorrichtung.**

(57) Gegenstand der Anmeldung ist eine Werkzeugmaschine mit einer vertikalen Arbeitsspindel oberhalb eines Werkstücktisches. Die Spindel ist an einem an einem Ständer vertikal geführten Spindelkasten höhenverfahrbar angeordnet und besitzt an ihrem Unterende eine Werkzeugaufnahme zum Einspannen von rotatorischen Schneidwerkzeugen unterschiedlicher Länge koaxial mit der Spindel. An dem Spindelkasten ist mitfahrend ein Werkzeugmagazin angeordnet, zwischen dem und der Werkzeugaufnahme der Spindel eine Werkzeugwechselvorrichtung vorgesehen ist. Eine solche Werkzeugmaschine soll nun dadurch verbessert werden, daß das Werkzeugmagazin nicht im Kollisionsbereich mit dem Werkstück oder anderen Aufbauten auf dem Werkstücktisch liegt und trotzdem der Verfahrweg der Arbeitsspindel für den Werkzeugwechsel auf ein Minimum begrenzt ist. Dazu ist das Werkzeugmagazin relativ zur Werkzeugaufnahme der Spindel nach oben hin versetzt. Ferner weist die Werkzeugwechselvorrichtung einen in einer Querebene zur Achse der Spindel um 180° schwenkbaren Doppelgreifer mit zwei zur Schwenkachse diametralen Greiferzangen auf, die an einer in Richtung der Schwenkachse des Doppelgreifers sich im wesentlichen über die Höhendifferenz zwischen der Werkzeugaufnahme der Spindel und dem Magazin erstreckenden, mit dem Schwenkantrieb des Doppelgreifers verbundenen Führungsvorrichtung getrennt voneinander höhenverfahrbar sowie drehfest gelagert sind.

Fig.1

# Werkzeugmaschine mit vertikaler Arbeitsspindel und Werkzeugwechselvorrichtung

Die Erfindung bezieht sich auf eine Werkzeugmaschine mit einer vertikalen Arbeitsspindel oberhalb eines Werkstücktisches, die an einem an einem Ständer vertikal geführten Spindelkasten höhenverfahrbar ist und an ihrem Unterende eine Werkzeugaufnahme zum Einspannen von rotatorischen Schneidwerkzeugen unterschiedlicher Länge koaxial mit der Spindel hat, und mit einem am Spindelkasten mitfahrend angeordneten Werkzeugmagazin zwischen dem und der Werkzeugaufnahme der Spindel eine Werkzeugwechselvorrichtung angeordnet ist.

Bei solchen Werkzeugmaschinen sind verschiedene Anordnungen für das Werkzeugmagazin bekannt. So kann das Werkzeugmagazin an der Rückseite des Maschinenständers vorgesehen werden, was eine aufwendigere Zubringervorrichtung für die betreffenden Werkzeuge zur Aufnahme der Arbeitsspindel hin bedingt. Ferner gibt es Werkzeugmagazine, die seitlich am Maschinenständer angeordnet sind, auch dies erfordert eine Werkzeugübergabevorrichtung zwischen dem Magazin und der Werkzeugaufnahme der Spindel, die nur dann in Aktion treten kann, wenn die Spindel in eine Wechselposition verfahren worden ist. Es ist ferner bekannt, das Werkzeugmagazin zwischen zwei Ständersäulen mittig in der Maschine anzuordnen, wobei das Magazin zum Werkzeugwechsel mit seinem Wechselplatz in eine fluchtende Position mit der Arbeitsspindel verfahren werden muß. Mit der Werkzeugaufnahme der Arbeitsspindel kann dann das Werkzeug unmittelbar mit dem Magazin ausgetauscht werden. Bei den vorgenannten Systemen ist es nachteilig, die Arbeitsspindel stets in eine Wechselposition verfahren zu müssen, die so ausgewählt werden muß, daß die Werkzeuge kollisionsfrei in die Spindel eingewechselt bzw. von dort entnommen werden können. Dazu wird die Arbeitsspindel meist in eine obere Endlage für den Werkzeugwechsel verfahren. Das zusätzliche Anfahren der Werkzeugwechselposition mit der Arbeitsspindel bedeutet jedoch eine Verlängerung der Span-Zu-Span-Zeit, also derjenigen Zeitspanne, die zwischen dem Außereingriffbringen des auszuwechselnden Werkzeugs am Werkstück und dem Eingriff des neu eingewechselten Werkzeugs am Werkstück vergeht.

Um die Span-Zu-Span-Zeiten zu verkürzen, ist eine Werkzeugmaschine der eingangs genannten Art auf dem Markt bekannt, bei der das Werkzeugmagazin mitfahrend am Spindelkasten angeordnet ist. Auch die Werkzeugwechselvorrichtung sitzt mitfahrend am Spindelkasten, so daß theoretisch in jeder Position der Arbeitsspindel der Werkzeugwechsel vorgenommen werden kann. Allerdings ist das Werkzeugmagazin konzentrisch um die Werkzeugaufnahme der Arbeitsspindel herum angeordnet, und es sind die Werkzeuge darin hängend gelagert, so daß wegen der unterschiedlichen Werkzeuglängen und der dadurch bedingten Kollisionsgefahr mit dem Werkstück beispielsweise, Einschränkungen hinsichtlich des verfügbaren Arbeitsraums hingenommen werden müssen. Zudem ist bei dieser bekannten Werkzeugmaschine die Werkzeugwechselvorrichtung sehr kompliziert, weil für jedes Werkzeug ein schwenkbarer Halter vorgesehen ist, der ständig im Eingriff an dem betreffenden Werkzeug verbleibt. Dafür sind an den Haltern Kugellager angeordnet, damit die Werkzeuge daran drehbar gelagert sind, denn auch während des Einsatzes in der Werkzeugaufnahme der Arbeitsspindel bleibt der Halter am Werkzeug. Wegen dieser Wechselvorrichtung können auch nur Spezialwerkzeuge in der bekannten Werkzeugmaschine verwendet werden.

Der Erfindung liegt nun die Aufgabe zugrunde, eine Werkzeugmaschine dieser Art zu schaffen, bei dem das Werkzeugmagazin nicht im Kollisionsbereich mit dem Werkstück oder anderen Aufbauten auf dem Werkstücktisch liegt und trotzdem der Verfahrweg der Arbeitsspindel für den Werkzeugwechsel auf ein Minimum begrenzt ist.

Diese Aufgabe wird bei einer erfindungsgemäßen Werkzeugmaschine dadurch gelöst, daß das Werkzeugmagazin relativ zur Werkzeugaufnahme der Spindel nach oben hin versetzt ist. Ferner weist dazu die Werkzeugwechselvorrichtung einen in einer Querebene zur Achse der Spindel um 180° - schwenkbaren Doppelgreifer mit zwei zur Schwenkachse diametralen Greiferzangen auf, die an einer in Richtung der Schwenkachse des Doppelgreifers sich im wesentlichen über die Höhen differenz zwischen der Werkzeugaufnahme der Spindel und dem Magazin erstreckenden, mit dem Schwenkantrieb des Doppelgreifers verbundenen Führungsvorrichtung getrennt voneinander höhenverfahrbar sowie drehfest gelagert sind.

An sich sind Doppelgreifer als Wechselvorrichtungen an Werkzeugmaschinen bekannt, neu ist bei der vorbeschriebenen Lösung jedoch, daß die Greiferzangen an einem sogenannten Zangenlift höhenverfahrbar angeordnet sind.

Der besondere Vorteil einer erfindungsgemäßen Werkzeugmaschine liegt darin, daß in dem Werkzeugmagazin Werkzeuge unterschiedlicher Längen hängend, also achsparallel mit der vertikalen Arbeitsspindel so angeordnet werden können, daß auch das längste dieser Werkzeuge bei den Spindelbewegungen nicht mit dem Werkstück oder mit anderen Aufbauten auf dem Werkstücktisch kollidieren kann. Deshalb wird vorteilhaft die Höhendifferenz zwischen der Werkzeugaufnahme der Spinde und dem Magazin so gewählt, daß sie der Längendifferenz zwischen dem kürzesten und dem längsten Werkzeug entspricht. Diese Höhendifferenz wird durch den vorerwähnten Zangenlift überbrückt, wobei aber immer nur die nicht auf die Werkzeugaufnahme der Spindel hin gerichtete Werkzeugzange getrennt von der anderen Zange nach oben hin zum Werkzeugmagazin verfahren wird. Im übrigen wird die mit ihrer Werkzeugaufnahme mit der Achse der Spindel ausgerichtete Greiferzange das betreffende Werkzeug aus der Werkzeugaufnahme der Spindel ausgehoben bzw. in diese eingesetzt, wozu in Höhen richtung ein Hub erforderlich ist, der etwas größer als die Spannlänge der üblicherweise verwendeten Spannkegel an den Werkzeugen ist. Von besonderem Vorteil ist, wenn während dieses Hubes der an der Werkzeugaufnahme der Arbeitsspindel befindlichen Greiferzange die zweite Greiferzange zeitgleich die Höhendifferenz zwischen der Werkzeugaufnahme der Spindel und dem Magazin überbrückt.

In der oberen Endlage bleibt die spindelseitige Greiferzange in einer Bereitschaftsstellung an der Werkzeugaufnahme der Spindel stehen. Sie gibt für den Bearbeitungsvorgang das Werkzeug frei, sobald es in die Werkzeugaufnahme der Spindel fest eingespannt ist. Gleichzeitig befindet sich die zweite Greiferzange in einer Bereitschaftsstellung am Werkzeugmagazin und kann dort ein Werkzeug an einen in einer Wechselposition verfahrbaren Werkzeugplatz abgeben bzw. von dort entnehmen. Dies setzt voraus, daß zumindest am Wechselplatz die betreffenden Werkzeuge hängend und damit achsparallel zur Arbeitsspindel bereitgehalten werden. Auch das längste Werkzeug liegt dann am Wechselplatz des Magazins immer noch außerhalb des Kollisionsbereichs mit dem zu bearbeitenden Werkstück.

Für den Antrieb der Greiferzangen in Höhenrichtung wird eine translatorische Antriebsvorrichtung vorgesehen, die unabhängig von dem Schwenkantrieb für den Doppelgreifer arbeitet. Dieser Schwenkantrieb ist mit einer Mitnehmerwelle verbunden, die sich über die Länge der Führungsvorrichtung für die Greiferzangen erstreckt und beispielsweise in Gestalt einer Vielkeilwelle Formschlußansätze in Längsrichtung hat, die mit Gegenführungen der Greiferzangen zusammenwirken.

Das mitfahrend am Spindelkasten angeordnete Werkzeugmagazin stellt eine zusätzliche Masse dar, die mit den Spindelbewegungen mitbeschleunigt werden muß. Um dabei Kippkräfte weitgehend zu vermeiden, die ein Verkanten des Spindelkastens bewirken könnten, wird der Spindelkasten vorteilhaft an zwei in Abstand voneinander stehenden Ständersäulen mit zwei zueinander parallelen Führungen gelagert. Dabei sind das Magazin, die Führungsvorrichtung des Doppelgreifers sowie die Spindel symmetrisch zu der vertikalen Mittenebene zwischen den Ständersäulen angeordnet.

Die Erfindung wird nachfolgend anhand der Zeichnung an einem Ausführungsbeispiel noch näher erläutert. Dabei zeigen:

Fig. 1: eine schematische Seitansicht einer Werkzeugmaschine mit einem am Spindelkasten mitfahrend angeordneten Werkzeugmagazin,

Fig. 2: eine Teilansicht der Maschine nach Fig.1 im Bereich der Liftvorrichtung zwischen der Werkzeugaufnahme der Spindel und dem Werkzeugmagazin für die Greiferzangen des Werkzeugwechslers und

Fig. 3: die Draufsicht auf die Greiferzangen.

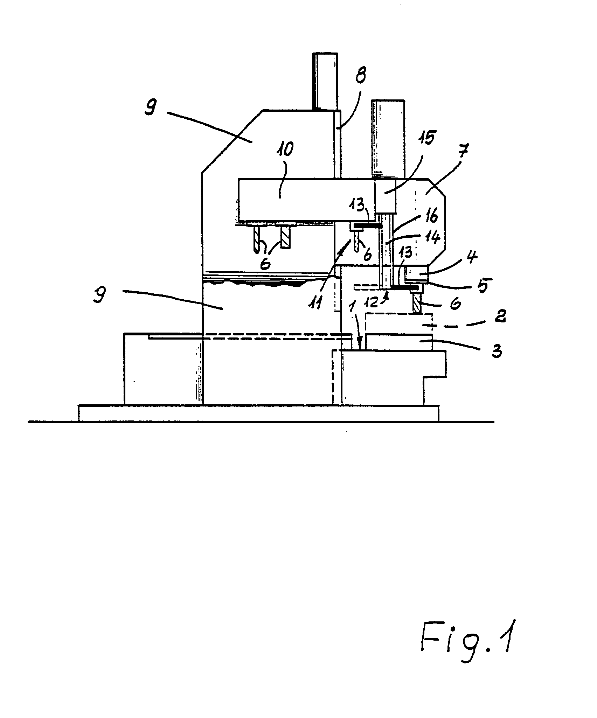

Im einzelnen erkennt man in Fig. 1 von der dargestellten Werkzeugmaschine einen Werkstücktisch 1, auf dem ein Werkstück 2 aufgespannt ist, das beispielsweise von einer Palette 3 getragen wird. Oberhalb des Werkstück t isches 1 ist eine vertikale Arbeitsspindel 4 verfahrbar, wobei insgesamt der Werkstücktisch 1 und die Arbeitsspindel 4 relativ zueinander in drei translatorischen, rechtwinklig zueinander stehenden Achsen verfahrbar sind. An ihrem Unterende trägt die Arbeitsspindel 4 eine Werkzeugaufnahme 5, in der ein rotatorisches Schneidwerkzeug 6, wie ein Fräser oder ein Bohrer, eingespannt werden kann.

Die Arbeitsspindel 4 ist in einem Spindelkasten 7 gelagert, der über eine oder mehrere Führungen 8, die mit der Achse der Arbeitsspindel 4 in Vertikalrichtung parallel sind, an einem Ständer 9 höhenverfahrbar angeordnet ist. Der Ständer 9 kann auch von zwei parallelen Säulen gebildet werden, zwischen denen ein Freiraum zur Aufnahme weiterer Maschinenaggregate gebildet ist, wobei dann der Spindelkasten 7 nach Art eines Portals an beiden Ständersäulen geführt ist.

An dem Spindelkasten 7 ist mitfahrend ein Werkzeugmagazin 10 fest angegliedert, das sich bei der Doppelsäulenausbildung des Ständers 9 in den Freiraum zwischen den beiden Ständersäulen hinein erstreckt. In dem Magazin 10 werden weitere Schneid werkzeuge 6 zum Einwechseln in die Werkzeugaufnahme 5 der Arbeitsspindel 4 bereitgehalten, die darin zumindest an einem Wechselplatz 11 hängend und achsparallel zur Werkzeugaufnahme 5 der Spindel 4 angeordnet sind. Entsprechend ihrer unterschiedlichen Länge stehen die Werkzeuge 6 mehr oder weniger weit am Wechselplatz 11 nach unten hin vor . Dies trifft natürlich für die Gesamtzahl der im Werkzeugmagazin 10 bevorratenden Werkzeuge dann zu, wenn darin generell an einem umlaufenden Transportmittel die Werkzeuge 6 hängend angeordnet sind. Insbesondere ist dies für diejenigen Bereiche des Werkzeugmagazins 10 von Bedeutung, die der Arbeitsspindel am nächsten liegen, was insbesondere für den Wechselplatz 11 zutrifft, da hier bei den Bewegungen der Arbeitsspindel 4 eine Kollision mit dem Werkstück 2 bestehen könnte.

Vermieden ist dies jedoch dadurch, daß das Werkzeugmagazin 10 höher als die Werkzeugaufnahme 5 der Arbeitsspindel 4 angeordnet ist. Ausgehend von einer für das kürzeste Werkzeug 6 festgelegten Höhe über dem Werkstücktisch 1, um dieses Werkzeug kollisionsfrei über die darauf aufgespannten Werkstücke 2 hinweg verfahren zu können, ist das Magazin 10 nochmals um die Längendifferenz zwischen diesem kürzesten Werkzeug und dem längsten zu verwendenden Werkzeug nach oben hin versetzt. Daher kann auch das längste Werkzeug dann nicht mit den Werkstücken 2 kollidieren.

Um aus dem Magazin 10 die Werkzeuge 6 in die Werkzeugaufnahme 5 der Arbeitsspindel 4 einwechseln bzw. von dort auswechseln zu können, befindet sich in der Vertikalprojektion gesehen mittig zwischen der Werkzeugaufnahme 5 und dem Wechselplatz 11 des Magazins 10 ein Doppelgreifer 12. Er hat zwei diametral zueinander angeordnete Greiferzangen 13, die entlang einer Führungsvorrichtung 14 nach Art eines Liftes höhenmäßig unabhängig voneinander verfahren werden können. Zudem ist der Doppelgreifer 12 um 180° umschlagbar, um jeden der beiden Greiferzangen 13 mit ihrer Werkzeugaufnahme in eine fluchtende Ausrichtung mit der Arbeitsspindel 4 bzw. deren Werkzeugaufnahme 5 bringen zu können. Die jeweils von der Arbeitsspindel 4 abgewandte Greiferzange 13 steht dann in Vertikalrichtung in einer fluchtenden Position mit dem Werkzeugwechselplatz 11 des Magazins 10.

Zum Verschwenken des Doppelgreifers 12 ist ein Schwenkantrieb 15 vorgesehen, der auf die Führungsvorrichtung 14 wirkt. Zum Verfahren der Greiferzangen 13 in Höhenrichtung dient eine translatorische Antriebsvorrichtung 16, deren Einzelheiten nicht näher dargestellt sind.

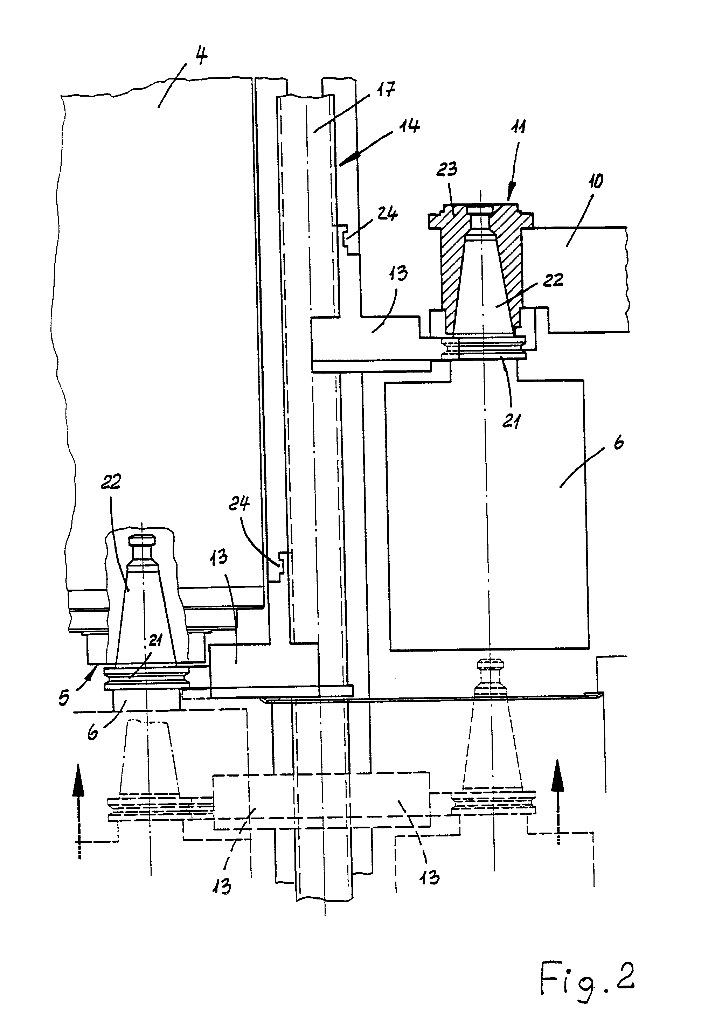

Figur 2 zeigt in einer vergrößerten Darstellung die Liftvorrichtung für die Greiferzangen 13, wobei die ausgezogenen Linien eine Bereitschaftsstellung der Greiferzangen 13 wiedergeben. Dabei befindet sich die eine Greiferzange 13 etwa auf der Höhe der Werkzeugaufnahme 5 der Arbeitsspindel 4 derart, daß sie in der von einem Mitnehmerbund 21 am eingespannten Werkzeug 6 aufgespannten Radialebene liegt. In gleicher Weise ist die zweite Greiferzange 13 auf dem Mitnehmerbund 21 desjenigen Werkzeugs 6 ausgerichtet, das sich bei dem höhergelegenen Werkzeugmagazin 10 am Wechselplatz 11 befindet. In gestrichen Linien in Fig. 2 unten ist die Schwenkposition der beiden Greiferzangen 13 angedeutet, in der die Drehung der Greiferzangen 13 um 180° um die Längsachse der Führungsvorrichtung 14 erfolgt. In dieser Schwenkposition ist die mit der Spindelachse 4 fluchtende Greiferzange 13 gegenüber der Bereitschaftsstellung so weit abgesenkt, daß das von der Werkzeugaufnahme 5 freigegebene oder in diese einzufahrende Werkzeug 6 mit seinem Spannkegel 22 außerhalb des Kollisionsbereichs mit der Werkzeugaufnahme 5 liegt. In gleicher Weise, jedoch um eine beträchtlich größere Höhendifferenz, steht bei der mit dem Wechselplatz 11 des Magazins 10 fluchtenden Greiferzange der Spannkegel 22 des von dieser gehaltenen Werkzeugs Außereingriff mit einer entsprechenden Werkzeugaufnahme 23 am Wechselplatz 11. Die Höhendifferenz zwischen der Schwenkposition und den auf unterschiedlichem Niveau liegenden Bereitschaftsstellungen überwinden beide Greiferzangen 13 zeitgleich, so daß die jeweils von der Spindel 4 abgekehrte Greiferzange 13, die eine wesentlich größere Höhendifferenz zu überbrücken hat, mit entsprechend höherer Geschwindigkeit verfahren werden muß. Dadurch ist sichergestellt, daß beim Werkzeugwechsel trotz des höhergelegten Werkzeugmagazins 10 keine Zeitverluste entstehen.

In Figur 2 erkennt man noch Aussparungen 24 an einem Ansatz der Greiferzangen 13, die für den Eingriff von Mitnehmern der translatorischen Antriebsvorrichtung 16 (Fig. 1) bestimmt sind.

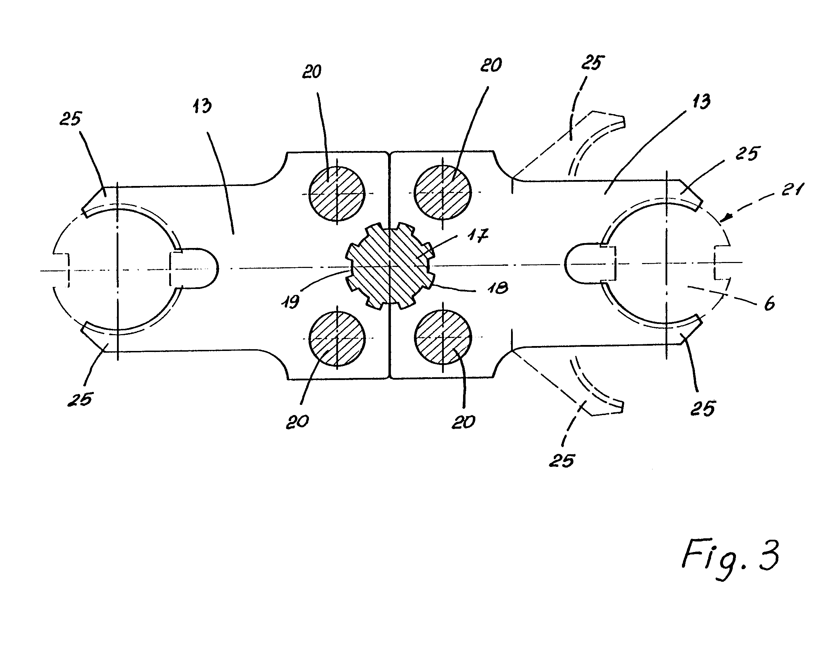

Fig. 3 zeigt Einzelheiten der beiden diametral zueinander liegenden Greiferzangen 13 und der zugehörigen Führungsvorrichtung 14. Die Greiferzangen besitzen spreizbare Spannbacken 25, die das betreffende Werkzeug 6 am Mitnehmerbund 21 umfassen. Ein wesentlicher Bestandteil der Führungsvorrichtung 14 (Figuren 1 und 2) ist eine zentrale Mitnehmerwelle 17, entlang der die beiden Greiferzangen 13 verschieblich sind. Die Mitnehmerwelle 17 kann als Vielkeilwelle ausgebildet sein und Formschlußansätze 18 besitzen, die mit entsprechenden Gegenführungen 19 der Greiferzangen 13 korrespondieren. Die Querschnittsgestaltung der Mitnehmerwelle 17 kann so gewählt sein, daß nicht nur darüber die Schwenkbewegung auf den Greiferzangen 13 übertragen werden kann, sondern daran die Greiferzangen 13 auch geführt sind. Beim Ausführungsbeispiel nach Fig. 3 sind noch zusätzliche Rundstangen 20 als Führungselemente vorgesehen, die parallel zur zentralen Mitnehmerwelle 17 angeordnet sind.

**Ansprüche**

1. Werkzeugmaschine mit einer vertikalen Arbeitsspindel (4) oberhalb eines Werkstücktisches (1), die an einem an einem Ständer (9) vertikal geführten Spindelkasten (7) höhenverfahrbar ist und an ihrem Unterende eine Werkzeugaufnahme (5) zum Einspannen von rotatorischen Schneidwerkzeugen (6) unterschiedlicher Länge koaxial mit der Spindel (4) hat, und mit einem am Spindelkasten (7) mitfahrend angeordneten Werkzeugmagazin (10), zwischen dem und der Werkzeugaufnahme (5) der Spindel (4) eine Werkzeugwechselvorrichtung (12-14) angeordnet ist,

dadurch gekennzeichnet, daß das Werkzeugmagazin (10) relativ zur Werkzeugaufnahme (5) der Spindel (4) nach oben hin versetzt ist und die Werkzeugwechselvorrichtung einen in einer Querebene zur Achse der Spindel (4) um 180 Grad - schwenkbaren Doppelgreifer (12) mit zwei zur Schwenkachse diametralen Greiferzangen (13) aufweist, die an einer in Richtung der Schwenkachse des Doppelgreifers (12) sich im wesentlichen über die Höhendifferenz zwischen der Werkzeugaufnahme (5) der Spindel (4) und dem Magazin (10) erstreckende, mit dem Schwenkantrieb (15) des Doppelgreifers (12) verbundenen Führungsvorrichtung (14) getrennt voneinander höhenverfahrbar sowie drehfest gelagert sind.

2. Werkzeugmaschine nach Anspruch 1, dadurch gekennzeichnet, daß die Höhendifferenz zwischen der Werkzeugaufnahme (5) der Spindel (4) und dem Magazin (10) der Längendifferenz zwischen dem kürzesten und dem längsten Werkzeug (6) entspricht.

3. Werkzeugmaschine nach Anspruch 1 oder 2, dadurch gekennzeichnet, daß neben der Führungsvorrichtung (14) eine translatorische Antriebsvorrichtung (16) für die Höhenverfahrbarkeit der Greiferzangen (13) angeordnet ist.

4. Werkzeugmaschine nach einem der Ansprüche 1 - 3, dadurch gekennzeichnet, daß der Spindelkasten (7) aus zwei in Abstand zueinander stehenden Ständersäulen (9) mit zwei miteinander parallelen Führungen (8) gelagert ist und das Magazin (10), die Führungsvorrichtung (14) des Doppelgreifers (12) sowie die Spindel (4) symmetrisch zu der vertikalen Mittenebene zwischen den Ständersäulen (9) angeordnet sind.

5. Werkzeugmaschine nach einem der Ansprüche 1 - 4, dadurch gekennzeichnet, daß die Führungsvorrichtung (14) eine in der Schwenkachse liegende Mitnehmerwelle (17) aufweist, die mit Gegenführungen (19) der Greiferzangen (13) korrespondierende Formschlußansätze (18) in Längsrichtung hat.

6. Werkzeugmaschine nach Anspruch 5, dadurch gekennzeichnet, daß die Greiferzangen (13) zusätzlich an mit der Mitnehmerwelle (17) parallelen Stangen (20) geführt sind.

7. Werkzeugmaschine nach einem der Ansprüche 1 - 6, dadurch gekennzeichnet, daß der Doppelgreifer (12) derart gesteuert ist, daß in einer Bereitschaftsstellung die erste Greiferzange (13) etwa auf der Höhe des Magazins (10) und die zweite Greiferzange (13) etwa auf der Höhe der Werkzeugaufnahme (5) der Spindel (4) angeordnet ist und in einer Schwenkposition sich beide Greiferzangen (13) auf gleicher Höhe an der Werkzeugaufnahme (5) der Spindel (4) befinden.

8. Werkzeugmaschine nach einem der Ansprüche 1 - 7, dadurch gekennzeichnet, daß eine der beiden Greiferzangen (13) in der Wechselposition mit der Achse des darin gehaltenen Werkzeugs (6) fluchtend mit der Achse der Spindel (4) ausgerichtet ist sowie um die Höhendifferenz für den Werkzeugaushub oder -einhub relativ zur Werkzeugaufnahme (5) der Spindel (4) entlang der Führungsvorrichtung (14) verfahren wird, während zeitgleich die zweite Zange (13) zwischen ihrer Schwenkposition und der Position am Magazin (10) verfahren wird.

Fig.1

Fig.2

Fig. 3

0 291 570